# EUROPEAN PATENT APPLICATION

(11) **EP 4 483 838 A1**
(43) Date of publication of application: **01.01.2025**
(21) Application number: 23181619.0
(22) Date of filing: 27.06.2023
(51) Int. Cl.: A61C 9/00

(54) **SYSTEM AND METHOD FOR DETERMINING A DESIRED DENTAL TRAY**

(71) Applicant: Koninklijke Philips N.V., 5656 AG Eindhoven (NL)
(72) Inventor: SPELT, Hanne Adriana Alijda, Eindhoven (NL); GERHARDT, Lutz Christian, Eindhoven (NL); KOOIJMAN, Gerben, Eindhoven (NL); JOHNSON, Mark Thomas, Eindhoven (NL)
(74) Representative: Philips Intellectual Property & Standards

(57) **Abstract**

A system and method for determining a desired dental tray for receiving an arch of a subject's teeth during a dental procedure. Tooth geometry data relating to a size and shape of the arch of teeth is obtained and processed to determine a desired dental tray for the arch.

## Description

### FIELD OF THE INVENTION

The invention relates to the field of dental trays.

### BACKGROUND OF THE INVENTION

Dental impressions are used to create a 3D model of a subject's teeth, gums and surrounding oral structures, in order to assess dental issues and/or to create customized dental appliances (e.g., mouthguards, retainers, nightguards, etc.) or prosthodontic appliances (e.g., dentures, crowns, bridges, etc.).

Dental impressions are taken by inserting a dental impression tray partially filled with impression material into a subject's mouth. The subject bites down on the dental impression tray until the impression material has set or cured. The dental impression tray is then removed from the subject's mouth, and the impression is sent to a dental laboratory to create a model of the subject's teeth.

Prior to taking a dental impression, a dentist (or another dental professional, such as a dental nurse) must select an appropriate dental impression tray, prepare the subject's teeth, and partially fill the selected dental impression tray with impression material.

It is important that the dental impression tray is an appropriate size and shape for the subject's teeth: the subject's teeth should fit inside the dental impression tray without touching the edges of the trays, in order to obtain a high-quality impression. However, larger dental impression trays cause greater discomfort to the subject during impression taking. In some cases, a dental impression tray that is too large for a subject's mouth triggers the subject's gag reflex, and may, in some cases, cause the subject to vomit. A dental impression tray should therefore ideally be no larger than is necessary for meeting the requirements for impression taking.

Dental professionals typically select an appropriate dental impression tray for a subject by trying out several dental impression trays in the subject's mouth. This takes up dental professional time, and can be uncomfortable for the subject.

Dental trays are also used for other purposes, such as teeth whitening. Again, it is important that the dental tray is no larger than necessary for the whitening procedure, in order to reduce discomfort to the subject whose teeth are being whitened, and in order to reduce wasted whitening fluid.

### SUMMARY OF THE INVENTION

The invention is defined by the claims.

According to examples in accordance with an aspect of the invention, there is provided a processing system for determining a desired dental tray for receiving an arch of a subject's teeth during a dental procedure, the processing system being configured to: obtain tooth geometry data relating to a size and shape of the arch of teeth; and process the tooth geometry data to determine a desired dental tray for the arch.

The inventors have recognized that data relating to a size and relative position of teeth in an arch of teeth may be used to determine a size and shape of dental tray that will fit the arch of teeth. The inventors have further recognized that data relating to a size and relative position of teeth is readily available, for example, using smart oral care devices.

By automatically determining a suitable dental tray, a likelihood of the dental tray meeting the requirements of the dental procedure is increased, while a likelihood of subject discomfort due to an excessively large tray is reduced. Further, dental professional time spent on selecting an appropriate dental tray may be reduced.

The dental tray may, for example, be a dental impression tray or a dental whitening tray.

The tooth geometry data may be obtained by the subject at home, for example, during a tooth brushing session. In this way, dental professional time may be reduced.

In some examples, the processing system is further configured to obtain available tray information for a set of available dental trays, wherein the available tray information comprises a size and shape of each dental tray in the set of available dental trays; and the step of determining the desired dental tray comprises processing the tooth geometry data and the available tray information to select the desired dental tray from the set of available dental trays.

In other words, the processing system may determine which of a set of available dental trays best fits the subject's arch.

The set of available dental trays may comprise the dental trays available to the subject's dental professional (e.g. a set of dental trays already owned by the subject's dental practice).

In some examples, the processing system is configured to select the desired dental tray from the set of available dental trays by: processing the tooth geometry data and the available tray information to determine a subset of available dental trays, wherein the subset of available dental trays are dental trays in the set of available dental trays that are capable of receiving the arch; and processing the subset of available dental trays to select, as the desired dental tray, the available dental tray having a smallest volume of free space in a tooth receiving space of the dental tray when the arch is received within the dental tray and/or a greatest coverage of the arch.

In other words, the selected dental tray is the available tray providing the closest fit and/or fullest coverage (out of the available trays that fit the subject's arch).

In some examples, the processing system is further configured to process the tooth geometry data and the available tray information to determine any modification required to the desired dental tray to improve a fit of the desired dental tray and/or a coverage of the arch by the desired dental tray.

The available dental trays may require a modification to improve a suitability for use with the subject.

For instance, where the desired dental tray does not have a long enough arc to cover the back molars of the arch, the determined modification may comprise an extension to the desired dental tray that would result in dental tray that covers the back molars. Similarly, where the subject has particularly long teeth or receded gums, the determined modification may comprise an extension to the height of the dental tray.

In some examples, the processing system is further configured to: process a determined modification to determine a modification piece for fitting to the desired dental tray to provide the determined modification; and control a programmable manufacturing device to produce the determined modification piece.

By controlling a programmable manufacturing device (e.g. a 3D printer) to produce the modification piece, dental professional time spent on modifying the dental tray may be reduced, and an accuracy of the modification may be improved.

Alternatively, the processing system may control an output user interface to provide a user-perceptible output of the determined modification. In other words, a dental professional may be provided with instructions to enable them to make the modification to the desired dental tray (e.g. by adding beading wax to extend the dental tray). By providing a dental professional with instructions for modification, a suitability of the modification made by the dental professional is improved, and dental professional time spent determining how to modify the dental tray is reduced.

In some examples, the processing system is configured to determine a desired dental tray for the arch by processing the tooth geometry data to determine a size and shape of the desired dental tray; and the processing system is further configured to control a programmable manufacturing device to produce the desired dental tray.

In other words, instead of selecting a tray from a set of available trays, a custom, subject-specific dental tray may be produced based on the tooth geometry data.

In some examples, the tooth geometry data comprises imaging data of at least half of the arch, and/or location data comprising locations of an oral care device as the oral care device is moved around at least half of the arch.

These types of tooth geometry data may be acquired by the subject at home, in advance of a dental intervention.

Imaging data of the arch may, for example, be acquired by a camera integrated in an oral care device (e.g. a toothbrush), a smartphone, or a dedicated scanning device.

Location data comprising locations of an oral care device may, for example, be acquired by one or more IMUs provided in or on the oral care device, and/or by an optical sensor that tracks movements of the oral care device with respect to the subject's mouth. The data acquired by a sensor that tracks locations of an oral care device may additionally comprise an orientation of the oral care device (with respect to the subject's mouth) at each location.

As an arch of teeth is typically highly symmetric, imaging or location (and optionally orientation) data for half of an arch provides sufficient information to determine a size and shape of the arch.

In some examples, the processing system is further configured to: process the determination of the desired dental tray to determine a volume of a tooth receiving space of the desired dental tray; and process the volume of the tooth receiving space and the tooth geometry data to determine a volume of dental material for use with the desired dental tray.

The inventors have recognized that data relating to a size of teeth additionally allows a volume between the arch of teeth and a tooth receiving space of the dental tray (i.e. a volume of a space to be filled with dental material, such as impression material or whitening fluid) to be estimated.

By determining a volume of dental material based on tooth geometry data and a volume of the tooth receiving space of the dental tray, the determined volume of material may be sufficient for the requirements of the dental procedure, while reducing waste of dental material and/or discomfort to the subject caused by excessive material.

In some examples, the step of determining the volume of dental material comprises processing the tooth geometry data and the volume of the tooth receiving space to determine a volume of free space in the tooth receiving space when the arch is received within the desired dental tray.

The free space in the tooth receiving space when the arch is received within the dental tray is the space to be filled by the dental material.

In some examples, the step of determining the volume of dental material further comprises adding a predetermined additional volume to the volume of free space to determine the volume of dental material.

The addition of a predetermined additional volume means that the determined volume of dental material is greater than the volume of space in the desired dental tray to be filled by the dental material. This takes into account the fact that some material may be lost during dispensing.

In some examples, the processing system is further configured to control a dental material dispensing unit to dispense the determined volume of dental material.

By automatically dispensing the determined volume of dental material, a likelihood of measurement error is reduced, thus increasing a likelihood of a suitable amount of dental material being used in the dental tray.

Alternatively, the determined volume of dental material may be output to a dental professional at an output user interface, to allow the dental professional to measure out the determined volume.

There is also proposed a system comprising: the processing system described above; and a programmable manufacturing device configured to receive a control instruction from the processing system.

There is also proposed a system comprising: the processing system described above; and a dental material dispensing unit configured to receive a control instruction from the processing system and dispense, responsive to the control instruction, the determined volume of dental material.

According to another aspect of the invention, there is provided a computer-implemented method for determining a desired dental tray for receiving an arch of a subject's teeth during a dental procedure, the computer-implemented method comprising: obtaining tooth geometry data relating to a size and shape of the arch of teeth; and processing the tooth geometry data to determine a desired dental tray for the arch.

There is also proposed a computer program product comprising computer program code means which, when executed on a computing device having a processing system, cause the processing system to perform all of the steps of the computer-implemented method described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a system for determining a desired dental tray for receiving an arch of a subject's teeth during a dental procedure, according to an embodiment of the invention;
Fig. 2 illustrates examples of arch parameters of an arch of teeth and a dental tray that may be used to select a desired dental tray; and
Fig. 3 illustrates a computer-implemented method for determining a desired dental tray for receiving an arch of a subject's teeth during a dental procedure, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and method for determining a desired dental tray for receiving an arch of a subject's teeth during a dental procedure. Tooth geometry data relating to a size and shape of the arch of teeth is obtained and processed to determine a desired dental tray for the arch.

Embodiments are at least partly based on the realization that tooth geometry data, which may be determined by the subject at home in advance of a dental procedure, provides information that may be used to determine a size and shape of a dental tray to fit an arch of the subject's teeth.

Illustrative embodiments may, for example, be employed in dental procedures involving the use of a dental tray that receives an arch of a subject's teeth, such as dental impression taking and dental whitening.

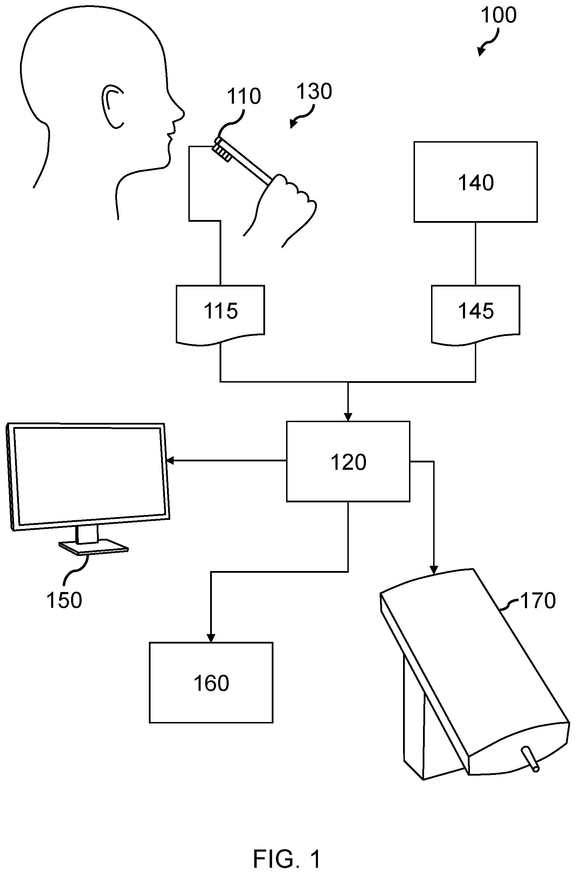

Fig. 1 illustrates a system 100 for determining a desired dental tray for receiving an arch of a subject's teeth during a dental procedure, according to an embodiment of the invention. The desired dental tray may, for example, be a dental impression tray for use in an impression taking procedure, or a dental whitening tray for use in a whitening procedure. The system comprises one or more sensors 110 for acquiring tooth geometry data and a processing system 120. The processing system is, itself, an embodiment of the invention.

The one or more sensors 110 are configured to acquire tooth geometry data 115 relating to a size and shape of the arch of teeth to be received by the dental tray. In Fig. 1, the one or more sensors 110 comprise a sensor provided in a toothbrush 130. However, as the skilled person will readily appreciate, the one or more sensors may additionally or alternatively be provided in another device (e.g. a smartphone, a smart mirror, a scanning device or another oral care device, such as an oral irrigator). The one or more sensors may be used in a home setting to acquire tooth geometry data in advance of a dental procedure.

In some examples, the one or more sensors 110 are configured to acquire imaging data of at least half of the arch of teeth. For instance, the one or more sensors may comprise a camera integrated in an oral care device, smartphone or scanning device. A camera in an oral care device may acquire imaging data of the arch during operation of the oral care device, as the oral care device is moved around the arch. A camera in another device (e.g. a smartphone or scanning device) may acquire imaging data of the arch by the subject (or another user, such as a dental professional) positioning the device to acquire imaging data of the inside of the subject's mouth. In some examples, the processing system 120 may control an output user interface to provide the subject with guidance/instructions as to how to position the device to acquire imaging data of the arch.

In some examples, the one or more sensors 110 may additionally or alternatively comprise one or more sensors configured to acquire location (and optionally orientation) data from which the size and shape of the arch may be determined. For instance, the one or more sensors may comprise sensors within an oral care device for tracking movements of the oral care device (e.g. one or more IMUs, accelerometers and/or high-resolution GPS sensors) or an optical sensor (e.g. in a smartphone or smart mirror) that tracks movements of an oral care device (e.g. using SLAM techniques). By tracking the movements of an oral care device as it is moved around at least half of the arch, the position (and optionally orientation) of the oral care device relative to a surface of the arch may be determined, and thus the size and shape of the arch may be determined.

The inherent drift in IMU signals can reduce an accuracy of location data acquired by IMUs. To compensate for this, where the one or more sensors 110 comprise one or more IMUs, the subject may be guided or instructed to move the oral care device according to a predetermined procedure (e.g. the processing system may control an output user interface, such as a smartphone, to provide the subject with a user-perceptible output of this guidance/instruction).

For instance, the predetermined procedure may include at least an instruction to move the oral care device according to a specified path (e.g. start at upper jaw right, move around the upper arch to upper jaw left, then move to lower jaw left and move around the lower arch to lower jaw right). An instruction may be given to prompt the subject to move to the next tooth in the specified path (i.e. once the subject has spent sufficient time at a tooth). The predetermined procedure may further include an instruction to the subject not to move their head during the measurement procedure. In some examples, unwanted head movement (in particular, head movement during tooth-to-tooth movement of the oral care device) may be detected, and the subject may be provided with feedback in response to detecting unwanted head movement (e.g. the subject may be instructed to repeat a movement of the oral care device while keeping their head still).

The integration of the signal acquired by the IMU(s) may be carried out only over periods of movement between teeth according to the predetermined procedure, thus mitigating the effects of both IMU drift and head movements of the subject.

The accuracy of tooth geometry data acquired by an IMU may additionally or alternatively be improved by combining the IMU data with tooth geometry data acquired by other sensors (e.g. optical sensors).

An external optical sensor (i.e. external to the subject's mouth) may be used to track the position of an oral care device and the position of the subject's head in order to determine a position (and optionally orientation) of the oral care device with respect to the subject's head as the oral care device is moved around the subject's mouth. Alternatively, an optical sensor provided on the oral care device itself may be used to track the position (and optionally orientation) of the oral care device with respect to the subject's mouth (e.g. as described in US Patent Application No. US 2021/010800 A1).

The inventors have recognized that imaging data of teeth and location (and optionally orientation) data relating to movements of an oral care device around teeth do not provide the same accuracy and level of detail as a dental impression, but may be used to provide a sufficiently-accurate determination of dental volume for determining a size and shape of a dental tray to be used in a dental procedure. The inventors have further recognized that, due to the high level of symmetry of an arch of teeth, imaging data and/or location (and optionally orientation) data of one half of the arch may provide sufficient information to determine the size and shape of the arch.

The processing system 120 is configured to obtain the tooth geometry data 115 from the one or more sensors. Alternatively, tooth geometry data acquired by the one or more sensors 110 may be stored by a memory unit (not shown in Fig. 1), and obtained by the processing system at a later time (e.g. shortly before the dental procedure for which the dental material is required).

The system 100 may further comprise a tray information unit 140 for obtaining available tray information 145. The available tray information relates to a set of dental trays available for use in the dental procedure (e.g. adult or child dental trays in extra small, small, medium, large and extra large sizes), and comprises a size and shape of each dental tray in the set of available dental trays. The available tray information may, for example, be input to the tray information unit by the subject's dental professional. In some examples, information relating to a size and shape of each of a plurality of commercially-available dental trays may be stored in a memory unit, and the subject's dental professional may simply provide an indication of which of these commercially-available dental trays are available for the procedure (e.g. by selecting from a list).

The processing system 120 may be configured to receive the available tray information 145, and process the tooth geometry data 115 and available tray information to select the desired dental tray from the set of available dental trays. Alternatively, the processing system may determine a customized (subject-specific) dental tray based on the tooth geometry data, as described below.

Various techniques are envisaged for selecting a desired dental tray from the set of available dental trays. For instance, the tooth geometry data 115 may be processed to determine arch parameters for the arch of teeth, which may be compared with corresponding arch parameters for each dental tray in the set of available dental trays.

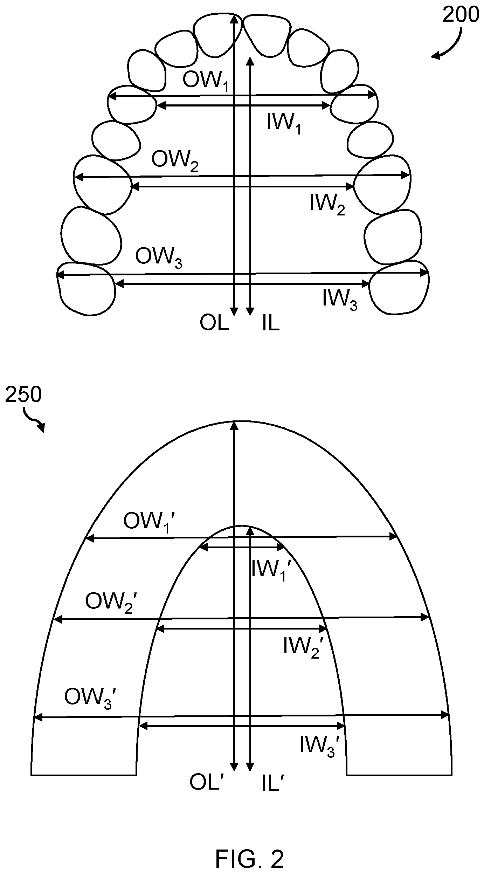

This approach is illustrated in Fig. 2, which shows example arch parameters that may be used to select a desired dental tray. The arch parameters for the arch of teeth 200 comprise an inner and outer arch length IL, OL, and an inner and outer arch width IW, OW at one or more positions with respect to the arch. Preferably, the arch parameters include inner and outer arch widths at a plurality of points, in order to account for the shape of the arch when selecting the desired dental tray. For instance, in Fig. 2, the arch parameters include three inner arch widths IW1, IW2, IW3 and three outer arch widths OW1, OW2, OW3.

An outer arch length OL is the distance between an outer surface of the front of the arch and the back of the arch (i.e. a distance between a front surface of a central incisor and a central position between the ends of the arch). An inner arch length IL is the distance between an inner surface of the front of the arch and the back of the arch (i.e. a distance between a back surface of a central incisor and a central position between the ends of the arch). An outer arch width OW1, OW2, OW3 is a distance between a point on the outer surface on one side of the arch and a corresponding point (i.e. a point having a same distance from the front of the arch) on the outer surface on the other side of the arch. An inner arch width IW 1, IW2, IW3 is the distance between a point on the inner surface on one side of the arch and a corresponding point on the inner surface on the other side of the arch.

The processing system 120 may process the available tray information 145 to determine corresponding arch parameters for each of the dental trays 250 in the set of available dental trays. The corresponding arch parameters may comprise an outer and inner arch length OL', IL' and an outer and inner arch width OW 1', OW2', OW3', IW1', IW2', IW3' at the same one or more positions with respect to the arch as determined for the arch of teeth. An outer arch of a dental tray is an arch defining a surface of the tooth receiving space that faces an outer surface of the arch of teeth when received in the dental tray (i.e. an outer contour of the dental tray). An inner arch of a dental tray is an arch defining a surface of the tooth receiving space that faces an inner surface of the arch of teeth when received in the dental tray (i.e. an inner contour of the dental tray). Additional parameters not shown in Fig. 2 are inner and outer height IH, OH of the arch of teeth and a corresponding inner and outer height of each dental tray IH' and OH'.

The processing system 120 may process the arch parameters for the arch of teeth and the arch parameters for each available dental tray to identify dental trays that are capable of receiving the arch of teeth. The processing system may determine that a dental tray is capable of receiving the arch of teeth in response to a determination that the outer arch length of the dental tray OL' is larger than the outer arch length of the teeth OL (OL' > OL), each outer arch width of the dental tray OW 1', OW2', OW3' is larger than the corresponding outer arch width of the teeth OW 1, OW2, OW3 (OW1' > OW1; OW2' > OW2; OW3' > OW3), the inner arch length of the dental tray IL' is smaller than the inner arch length of the teeth IL (IL' < IL), and each inner arch width of the dental tray IW1', IW2', IW3' is smaller than the corresponding inner arch width of the teeth IW1, IW2, IW3 (IW1' < IW1; IW2' < IW2; IW3' < IW3). In other words, the processing system may require that the shape defined by the arch parameters of the arch of teeth fits entirely within the shape defined by the arch parameters of the dental tray in order to determine that the dental tray is capable of receiving the arch of teeth.

In some examples, the processing system 120 may also require, in order to determine that a dental tray is capable of receiving the arch of teeth, that the inner height of the dental tray IH' is larger than the inner height of the arch of teeth IH (IH' > IH), and that the outer height of the dental tray OH' is larger than the outer height of the arch of teeth OH (OH' > OH).

In some examples, the processing system 120 may determine that the shape defined by the arch parameters of the arch of teeth fits entirely within the shape defined by the arch parameters of the dental tray in response to the arch width requirements being satisfied (e.g. OW1' > OW1; OW2' > OW2; OW3' > OW3; IW1' < IW1; IW2' < IW2; IW3' < IW3). In other words, dental trays that do not extend along the full length of the arch of teeth or reach the full height of the teeth may nonetheless be determined to be capable of receiving the arch of teeth, as long as the tray fits the curvature of the arch. In some examples, the processing system may require that the arch width and arch height requirements are satisfied, but not require that the dental tray fully extends along the length of the arch of teeth.

Which arch parameters are used to determine whether a dental tray is capable of receiving an arch of teeth may depend on the dental trays available. For instance, in response to a determination that none of the dental trays in the set of available dental trays satisfies the arch length requirements (OL' > OL and IL' < IL), the processing system may determine which dental trays are capable of receiving the arch of teeth based on only the arch widths (or based on the arch widths and heights). Similarly, in response to a determination that none of the dental trays in the set of available dental trays satisfies the arch height requirements (OH' > OH and IH' < IH), the processing system may determine which dental trays are capable of receiving the arch of teeth based on only the arch widths (or based on the arch widths and lengths). A modification may then be made to the dental tray that is selected as the desired dental tray in order to produce a dental tray that fully encloses the arch of teeth, as described below.

In some examples, the processing system 120 may further require, in order to determine that a dental tray is capable of receiving the arch of teeth, that the dental tray provides sufficient space around the arch of teeth for dental material to sufficiently cover the teeth received within the dental tray. For instance, the processing system may determine that a dental tray is capable of receiving the arch of teeth in response to a determination that the arch parameters of the tray meet the requirements set out above, and that an outer gap that exceeds a predetermined outer gap threshold and an inner gap that exceeds a predetermined inner gap threshold. An outer gap is a gap between an outer surface of the arch of teeth and the outer arch of the dental tray when the arch of teeth is received within the dental tray. An inner gap is a gap between an inner surface of the arch of teeth and the inner arch of the dental tray when the arch of teeth is received within the dental tray.

Alternatively, the processing system 120 may determine whether each dental tray is capable of receiving the arch of teeth by first determining whether a volume of a tooth receiving space of the dental tray is greater than a volume of the arch of teeth, then, for dental trays for which the volume of the tooth receiving space is greater than the volume of teeth, determining whether the shape of the dental tray allows the arch of teeth to be contained within the dental tray using image-based techniques.

The processing system may, for example, determine whether the shape of the dental tray allows the arch of teeth to be contained within the dental tray using CAD interference analysis techniques. In some examples, the outer contours of the teeth and dental tray and the inner contours of the teeth and dental tray may be considered separately: for instance, the processing system may first determine whether there is a point of no interference between the outer contour of the arch of teeth and the outer contour of the tooth receiving space of the dental tray by shifting a digital 3D model (or simplified 3D reconstruction) of the arch of teeth and a digital 3D model of the dental tray with respect to one another. In response to identifying such a point of no interference, the processing system may determine whether, at the relative position between the arch of teeth and the dental tray at which this point of no interference was identified, there is also a point of no interference between the inner contour of the arch of teeth and the inner contour of the tooth receiving space of the dental tray. As the skilled person will appreciate, the processing system may alternatively consider the inner contours first.

A digital 3D model of the dental tray may be comprised in the available tray information 145, or may be generated using on the available tray information. A digital 3D model of the arch of teeth may be generated using imaging data of the arch of teeth or a contour of the arch of teeth determined from location (and optionally orientation) data. A simplified 3D reconstruction may be determined from location (and optionally orientation) data where the location data is insufficient to determine a contour, as described below.

The processing system 120 may select a dental tray that is capable of receiving the arch of teeth as the desired dental tray.

In some examples, the processing system 120 may select the desired dental tray from the set of available dental trays by first identifying available dental trays that are capable of receiving the arch of teeth, using any of the techniques described above, to determine a subset of available dental trays. The processing system may then process the subset of available dental trays to select the desired dental tray according to one or more predetermined conditions. For example, the processing system may, in selecting the desired dental tray from the subset of available dental trays, be configured to minimize a volume of free space in the tooth receiving space when the arch is received within the dental tray and/or maximize a coverage of the arch provided by the dental tray. Other suitable predetermined conditions will be apparent to the skilled person. For instance, the processing system may be configured to select, as the desired dental tray, the dental tray in the subset having the least variation, along the length of the arch, in the volume of free space between the tray and the arch of teeth.

Returning to Fig. 1, the processing system 120 may be configured to process the tooth geometry data 115 and the size and shape of the selected desired dental tray (from the available tray information) to determine any modification required to the desired dental tray. The determined modification may be a modification to improve a fit of the desired dental tray and/or to improve a coverage of the arch by the desired dental tray. For instance, in response to a determination that the length of the arch of teeth exceeds a length of the tooth receiving space of the desired dental tray, the processing system may determine an extension to the length of the desired dental tray that would result in a tray that is longer than the length of the arch of teeth. Similarly, in response to a determination that the height of the teeth exceeds a height of the tooth receiving space of the desired dental tray, the processing system may determine an extension to the height of the desired dental tray that would result in a dental tray that would cover the entire height of the subject's teeth.

If any modification is determined to be required, the processing system 120 may control an output user interface 150 to provide a user-perceptible output of the determined modification. The user-perceptible output may, for example, comprise user-perceptible output of a length or height by which the desired dental tray should be extended. A dental professional may then modify the desired dental tray according to the modification indicated by the output (e.g. by adding beading wax to the desired dental tray).

Alternatively, the processing system may process the determined modification to determine a modification piece, and control a programmable manufacturing device 160 to produce the determined modification piece. The modification piece may be determined such that, when fitted to the selected desired dental tray, the modification piece provides the determined modification. The programmable manufacturing device may be any programming manufacturing device suitable for providing the determined medication, such as a 3D printer, a CNC drilling machine, or a lithography machine.

In some examples, the determined modification may comprise a reduction to the desired dental tray (e.g. a reduction in height at one or more positions of the dental tray and/or a reduction in length), and the processing system may control the programmable manufacturing device 160 to remove a part of the desired dental tray in order to provide the determined modification.

As an alternative to determining the desired dental tray by selecting from a set of available dental trays, the processing system 120 may, in some examples, process the tooth geometry data 115 to determine a size and shape of the desired dental tray (i.e. the size and shape of a subject-specific dental tray). The processing system may then control the programmable manufacturing device 160 to produce the desired dental tray.

In some examples, having determined the desired dental tray, the processing system 120 may be further configured to determine a volume of dental material for use with the desired dental tray (e.g. a volume of impression material or whitening fluid). The processing system may process the determination of the desired dental tray to determine the volume of a tooth receiving space of the desired dental tray, and process the tooth geometry data 115 and the determined volume of the tooth receiving space to determine the volume of dental material for use with the desired dental tray.

Where a modification to the desired dental tray is determined, the processing system 120 may determine, as the volume of the tooth receiving space used to determine the volume of dental material, the volume that the tooth receiving space of the desired dental tray will have with the modification made to the desired dental tray.

In some examples, the processing system 120 may determine the volume of dental material by processing the tooth geometry data 115 and the volume of the tooth receiving space to determine a volume of free space in the tooth receiving space when the arch of teeth is received within the desired dental tray. The volume of free space in the tooth receiving space is the difference between the volume of the arch to be received in the desired dental tray and the volume of the tooth receiving space of the desired dental tray.

Where the tooth geometry data comprises imaging data for the arch, the processing system 120 may process the imaging data to construct a digital 3D model of the arch. The processing system may then process the 3D model to determine a height, width and depth of each tooth, and a volume of space between the teeth, in order to determine a volume of the arch of teeth.

The use of imaging data for an arch of teeth to construct a 3D digital model of the arch is known, and suitable techniques for constructing the 3D digital model will be apparent to the skilled person. See, for example, International Patent Applications Nos. WO 2019/021285 A1 and WO 2023/036876 A1.

Where the tooth geometry data comprises location data (and optionally orientation data), the locations of the oral care device as the oral care device is moved around the arch may be processed to determine a contour of the arch. The contour may then be processed to determine a volume of the arch.

Alternatively (and in particular, where the location data is insufficient to determine a contour that is sufficiently complete for determining volume), the location data (and optionally orientation data) may be processed to determine at least a length of an outer (buccal) surface of the arch. The volume of the arch may be determined by estimating the width and height of teeth in the arch, and processing the determined length and estimated width and height to determine the volume, or by further processing the location (and optionally orientation) data to determine a length of an inner (lingual) surface and/or a width of an occlusal surface (i.e. a biting/chewing surface) of the arch, and processing the determined measurements to determine the volume. In other words, a simplified 3D reconstruction of the arch may be determined based on the location data. The use of orientation data, where available, may improve an accuracy of the simplified 3D reconstruction.

In some examples, the volume of free space may be determined as the volume of dental material to be used. In other examples, the volume of dental material may be determined by adding a predetermined additional volume to the volume of free space. The predetermined additional volume may be based on an expected loss of material during dispensing. For instance, the predetermined additional volume may be 10% of the volume of free space.

In some examples, the processing system 120 may control the output user interface 150 to provide a user-perceptible output of the determined volume of dental material to the subject's dental professional. Suitable user-perceptible outputs for providing the determined volume of dental material to a user will be apparent to the skilled person. For instance, the control instruction may be provided to the user in the form of a textual display and/or an image.

In some examples, the user-perceptible output may comprise a mass of dental material. For instance, where the type of dental material to be used in the dental procedure is known (e.g. obtained via user input), the processing system 120 may process the determined volume of dental material and a density of the type of dental material to determine a mass of dental material for use with the tooth receiving element, and control the output user interface 150 to output the determined mass. Where the type of dental material to be used is not known, the processing system may process the determined volume of dental materials and a density of each of a predetermined set of dental materials to determine a mass for each dental material in the predetermined set. The density of various dental materials may be stored by, and obtained from, a memory unit (not shown in Fig. 1). The processing system may then control the output user interface to output a table showing the mass of dental material for each type of dental material, allowing a dental professional to select the mass of the type of dental material they intend to use in the dental procedure.

In some examples, the user-perceptible output may comprise a percentage of the tooth receiving space of the desired dental tray to be filled by the dental material. This may be determined based on the determined volume of dental material and the volume of the tooth receiving space of the desired dental tray. In other examples, the user-perceptible output may comprise a height within the tooth receiving space to which determined volume of dental material would fill the tooth receiving space (determined based on the determined volume of dental material and the dimensions of the tooth receiving space). The dental professional would then be able to mark the level of this height on the desired dental tray, and use this mark as a guide when filling the desired dental tray with the dental material.

In some examples, the system 100 may further comprise a dental material dispensing unit 170 for dispensing the dental material used with the desired dental tray (e.g. a mixing unit for dental impression material), adapted to receive a control instruction from the processing system 120 and dispense a specified volume of dental material in response to the control instruction. The processing system may control the dental material dispensing unit to dispense the determined volume of dental material.

As the skilled person will appreciate, the processing system 120 may repeat the determination of the desired dental tray (and optionally the determination of the volume of material for use with the desired dental tray) for a second arch of teeth in the subject's mouth, in order to provide full coverage of the subject's teeth.

Although Fig. 1 shows a system 100 with an output user interface 150, a programmable manufacturing device 160 and a dental material dispensing unit 170, the skilled person will appreciate that, in some examples, not all of these elements may be included in the system. For instance, only one of the output user interface, programmable manufacturing device and dental material dispensing unit may be included in the system 100, or the system 100 may include two of these elements, but not the other.

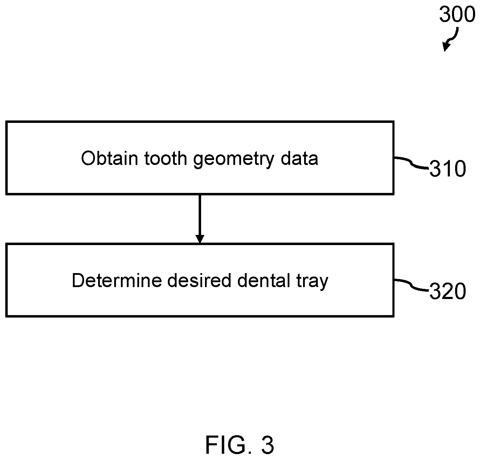

Fig. 3 illustrates a computer-implemented method 300 for determining a desired dental tray for receiving an arch of a subject's teeth during a dental procedure, according to an embodiment of the invention.

The method 300 begins at step 310, at which tooth geometry relating to a size and shape of the arch of teeth is obtained.

At step 320, the tooth geometry data is processed to determine a desired dental tray for the arch.

It will be understood that the disclosed methods are computer-implemented methods. As such, there is also proposed a concept of a computer program comprising code means for implementing any described method when said program is run on a processing system.

The skilled person would be readily capable of developing a processing system for carrying out any herein described method. Thus, each step of a flow chart may represent a different action performed by a processing system, and may be performed by a respective module of the processing system.

As discussed above, the system makes use of a processing system to perform the data processing. The processing system can be implemented in numerous ways, with software and/or hardware, to perform the various functions required. The processing system typically employs one or more microprocessors that may be programmed using software (e.g. microcode) to perform the required functions. The processing system may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs). Thus, the processing system may be embodied as a digital and/or analog processing system.

In various implementations, the processing system may be associated with one or more storage media such as volatile and non-volatile computer memory such as RAM, PROM, EPROM, and EEPROM. The storage media may be encoded with one or more programs that, when executed on one or more processing systems and/or controllers, perform the required functions. Various storage media may be fixed within a processing system or controller may be transportable, such that the one or more programs stored thereon can be loaded into a processing system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A processing system (120) for determining a desired dental tray for receiving an arch of a subject's teeth during a dental procedure, the processing system being configured to:
obtain tooth geometry data (115) relating to a size and shape of the arch of teeth; and
process the tooth geometry data to determine a desired dental tray for the arch.

2. The processing system (120) of claim 1, wherein:
the processing system is further configured to obtain available tray information (145) for a set of available dental trays, wherein the available tray information comprises a size and shape of each dental tray in the set of available dental trays; and
the step of determining the desired dental tray comprises processing the tooth geometry data (115) and the available tray information to select the desired dental tray from the set of available dental trays.

3. The processing system (120) of claim 2, wherein the processing system is configured to select the desired dental tray from the set of available dental trays by:
processing the tooth geometry data (115) and the available tray information (145) to determine a subset of available dental trays, wherein the subset of available dental trays are dental trays in the set of available dental trays that are capable of receiving the arch; and
processing the subset of available dental trays to select, as the desired dental tray, the available dental tray having a smallest volume of free space in a tooth receiving space of the dental tray when the arch is received within the dental tray and/or a greatest coverage of the arch.

4. The processing system (120) of claim 2 or 3, wherein the processing system is further configured to process the tooth geometry data (115) and the available tray information (145) to determine any modification required to the desired dental tray to improve a fit of the desired dental tray and/or a coverage of the arch by the desired dental tray.

5. The processing system (120) of claim 4, wherein the processing system is further configured to:
process a determined modification to determine a modification piece for fitting to the desired dental tray to provide the determined modification; and
control a programmable manufacturing device (160) to produce the determined modification piece.

6. The processing system (120) of claim 1, wherein:
the processing system is configured to determine a desired dental tray for the arch by processing the tooth geometry data (115) to determine a size and shape of the desired dental tray; and
the processing system is further configured to control a programmable manufacturing device (160) to produce the desired dental tray.

7. The processing system (120) of any of claims 1 to 6, wherein the tooth geometry data (115) comprises imaging data of at least half of the arch, and/or location data comprising locations of an oral care device as the oral care device is moved around at least half of the arch.

8. The processing system (120) of any of claims 1 to 7, wherein the processing system is further configured to:
process the determination of the desired dental tray to determine a volume of a tooth receiving space of the desired dental tray; and
process the volume of the tooth receiving space and the tooth geometry data (115) to determine a volume of dental material for use with the desired dental tray.

9. The processing system (120) of claim 8, wherein the step of determining the volume of dental material comprises processing the tooth geometry data (115) and the volume of the tooth receiving space to determine a volume of free space in the tooth receiving space when the arch is received within the desired dental tray.

10. The processing system (120) of claim 9, wherein the step of determining the volume of dental material further comprises adding a predetermined additional volume to the volume of free space to determine the volume of dental material.

11. The processing system (120) of any of claims 8 to 10, wherein the processing system is further configured to control a dental material dispensing unit (170) to dispense the determined volume of dental material.

12. A system (100) comprising:
the processing system (120) of claim 5 or 6; and
a programmable manufacturing device (160) configured to receive a control instruction from the processing system.

13. A system (100) comprising:
the processing system (120) of claim 11; and
a dental material dispensing unit (170) configured to receive a control instruction from the processing system and dispense, responsive to the control instruction, the determined volume of dental material.

14. A computer-implemented method (300) for determining a desired dental tray for receiving an arch of a subject's teeth during a dental procedure, the computer-implemented method comprising:
obtaining tooth geometry data (115) relating to a size and shape of the arch of teeth; and
processing the tooth geometry data to determine a desired dental tray for the arch.

15. A computer program product comprising computer program code means which, when executed on a computing device having a processing system, cause the processing system to perform all of the steps of the computer-implemented method (300) according to claim 14.
